# EUROPEAN PATENT SPECIFICATION

(11) **EP 4 324 129 B1**
(45) Date of publication and mention of the grant of the patent: **18.11.2026**
(21) Application number: 21936468.4
(22) Date of filing: 16.04.2021
(51) Int. Cl.: H04L 1/00, H04B 7/06, H04L 27/36, H04L 27/38, H04L 27/26

(54) **OVERLAP ENCODING AND DECODING FOR MULTICARRIER TRANSMISSION SCHEMES**
ÜBERLAPPUNGSKODIERUNG UND -DEKODIERUNG FÜR MEHRTRÄGERÜBERTRAGUNGSVERFAHREN
CODAGE ET DÉCODAGE PAR CHEVAUCHEMENT POUR SYSTÈMES DE TRANSMISSION À PORTEUSES MULTIPLES

(43) Date of publication of application: 21.02.2024
(73) Proprietor: Telefonaktiebolaget LM Ericsson (publ), 164 83 Stockholm (SE)
(72) Inventor: LIN, Peng, Beijing 100102 (CN); LU, Chenguang, 191 63 Sollentuna (SE)
(74) Representative: Ericsson
(86) International application number: PCT/CN2021/087846
(87) International publication number: WO 2022/217593

(56) References cited:
- CN-A- 105 577 247
- CN-A- 109 842 460
- US-A1- 2018 205 586
- US-A1- 2020 235 759
- HU YUE ET AL: "Channel Equalization and Data Detection of OVFDM Under Fading Channel", IEEE ACCESS, IEEE, USA, vol. 8, 27 April 2020 (2020-04-27), pages 77120 - 77130, XP011786591, DOI: 10.1109/ACCESS.2020.2989801
- JIANG H ET AL: "Overlapped frequency-time division multiplexing", JOURNAL OF CHINA UNIVERSITIES OF POSTS AND TELECOMMUNICATIONS, BEIJING-YOUDIAN-DAXUE, CN, vol. 16, no. 2, 1 April 2009 (2009-04-01), pages 8 - 13, XP026085535, ISSN: 1005-8885, [retrieved on 20090401], DOI: 10.1016/S1005-8885(08)60193-4
- XIA ZHANG ; PEIJIAN ZHANG ; DAOBEN LI: "Overlapped Time Division Multiplexing System Using Turbo Product Code", WIRELESS COMMUNICATIONS NETWORKING AND MOBILE COMPUTING (WICOM), 2010 6TH INTERNATIONAL CONFERENCE ON, 23 September 2010 (2010-09-23), Piscataway, NJ, USA , pages 1 - 5, XP031774864, ISBN: 978-1-4244-3708-5
- LI, DAOBEN: "A novel high spectral efficiency waveform coding OVTDM", INTERNATIONAL JOURNAL OF WIRELESS COMMUNICATIONS AND MOBILE COMPUTING, vol. 2, no. 4-1, 24 December 2014 (2014-12-24), pages 11 - 26, XP009540584, ISSN: 2330-1007, DOI: 10.11648/j.wcmc.s.2014020401.12

## Description

### FIELD OF INVENTION

The present invention relates to an overlap encoding and decoding for multicarrier transmission schemes, and in particular to an overlap encoding method, a transmission apparatus using the overlap encoding method, to an overlap decoding method, and to a receiver apparatus using the overlap decoding method.

### TECHNICAL BACKGROUND

Channel coding is an important area in every generation of mobile communication system. Recently, a new coding scheme named overlapped time domain multiplexing OVTDM has got some attentions in academia, L. Daoben, "A novel high spectral efficiency waveform coding OVTDM", Int. J. Wireless Commun. Mobile Comput., vol. 2, nos.1-4, Dec. 2014, pp.11-26.

Here, the basic idea is to code the time-domain symbols with overlapped waveforms which can then be decoded by sequence decoding schemes like Viterbi decoder. The difference from the classic coding schemes is that OVTDM does not have any redundancy in the bit domain. The coding gain is purely from the overlapped structure. The existing studies in literature claim that it can achieve very high spectrum efficiency.

However, experiments show that the improvement of spectrum efficiency have been over-estimated. Further, the usage of OVTDM is limited to single carrier transmission schemes and requires the implementation of a complex and costly equalizer to combat against wireless multipath channels. Further, contrary to single carrier transmission schemes OFDM is a multicarrier transmission scheme and has been widely adopted wideband wireless systems, e.g. 4G and 5G, as well as WiFi. Also, it may continue to be used in future systems, like 6G and next generation WiFi.

While it would be of value if the overlapped coding structure can be used with a multicarrier transmission scheme like OFDM currently no such a solution is available.

HU YUE ET AL: "Channel Equalization and Data Detection of OVFDM Under Fading Channel",IEEE ACCESS, IEEE, USA, vol. 8, 27 April 2020 (2020-04-27), pages 77120-77130, XP011786591,DOI: 10.1109/ ACCESS.2020.2989801, discusses a ZP (Zero-padding) - OVFDM architecture which benefits from frequency diversity.

### SUMMARY OF INVENTION

In view of the above, the object of the present invention is to provide an approach to overlap encoding and decoding which is applicable to multicarrier transmission schemes. The present invention is defined in the appended independent claims. Further preferred embodiments are defined in the dependent claims.

According to a first aspect of the present invention this object is achieved by a transmission method in a transmitter chain using a multicarrier transmission scheme having multiple subcarriers. The transmission method comprises a step of multiplying constellation symbols representing data bits in the frequency domain with samples of a coding waveform to form sample products with respect to every constellation symbol. Then follows a step of assigning sample products of every constellation symbol to different subcarriers. A further step is the determination of an overlap encoded frequency domain transmission symbol with respect to every subcarrier as sum of sample products assigned to every subcarrier followed by a step of transforming every overlap encoded frequency domain transmission symbol into a time domain transmission symbol each having a predetermined number of samples. A further step relates to truncating the time domain transmission symbol by removing a predetermined number of samples from the time domain transmission symbol prior to transmission thereof.

According to a second aspect of the present invention the object outlined above is also achieved by a receiving method in a receiver chain processing time domain reception symbols with a first number of samples as being transmitted by a transmission method according to the first aspect of the present invention. The receiving method comprises a step of determining a reconstructed time domain reception symbol with a second number of samples being larger than the first number of samples by adding zero samples to every received time domain reception symbol. Then follow a step of transforming the reconstructed time domain reception symbol into subcarrier samples of an overlap encoded frequency domain reception symbol and a step of decoding the overlap encoded frequency domain reception symbol using a sequence decoding algorithm.

According to a third aspect of the present invention the object outlined above is also achieved by a transmission apparatus for operating according to a multicarrier transmission scheme having multiple subcarriers. The transmission apparatus comprises an encoder unit, a transformation unit, a truncation unit, and a transmission unit. Further, the encoder unit has a multiplying unit, an assignment unit, and an overlap encoding unit.

Operatively, the multiplying unit of the encoder unit is adapted to multiply constellation symbols representing data bits in the frequency domain with samples of a coding waveform to form sample products with respect to every constellation symbol. Also, the assignment unit of the encoder unit is adapted to assign sample products of every constellation symbol to different subcarriers and the overlap encoding unit is adapted to determine an overlap encoded frequency domain transmission symbol with respect to every subcarrier as sum of sample products assigned to every subcarrier.

Further, operatively the transformation unit is adapted to transform every overlap encoded frequency domain transmission symbol into a time domain transmission symbol each having a predetermined number of samples and the truncation unit is adapted to truncate the time domain transmission symbol by removing a predetermined number of samples from the time domain transmission symbol.

Finally, operatively the transmission unit is adapted to transmit the truncated time domain transmission symbol.

According to a fourth aspect of the present invention the object outlined above is also achieved by a receiver apparatus for operating in a receiver chain processing time domain reception symbols with a first number of samples as being transmitted by a transmission method according to the first aspect of the present invention. The receiver apparatus comprises a receiving unit, a reconstruction unit, and a decoding unit.

Operatively, the receiving unit is adapted to receive a time domain reception symbol. Further, operatively the reconstruction unit is adapted to determine a reconstructed time domain reception symbol with a second number of samples being larger than the first number of samples by adding zero samples to the received time domain reception symbol. Still further, operatively the a transformation unit is adapted to transform the reconstructed time domain reception symbol into subcarrier samples of an overlap encoded frequency domain reception symbol and the decoding unit is adapted to decode overlap encoded frequency domain reception symbols using a sequence decoding algorithm.

According to a fifth aspect of the present invention the object outlined above is also achieved by an apparatus for operating in a transmitter chain using a multicarrier transmission scheme having multiple subcarriers comprising a processor and a memory. Here, the memory contains instructions executable by said processor whereby the apparatus is operative to execute the steps of a transmission method according to the first aspect of the present invention.

According to a sixth aspect of the present invention the object outlined above is also achieved by an apparatus for operating in a receiver chain processing time domain reception symbols with a first number of samples and being transmitted by a transmission method according to the first aspect of the present invention. Here, the memory contains instructions executable by the processor whereby the apparatus is operative to execute the receiving method according to the second aspect of the present invention.

According to a seventh aspect of the present invention the object outlined above is also achieved by a computer program product directly loadable into the internal memory of a mobile communication unit, comprising software code portions for performing the steps of a transmission method according to the first aspect of the present invention or of a receiving method according to the second aspect of the present invention.

### DESCRIPTION OF DRAWING

In the following preferred embodiments of the present invention will be explained with reference to the drawing in which:
- Fig. 1: shows a schematic diagram of a transmission apparatus for operating in a transmitter chain using a multicarrier transmission scheme having multiple subcarriers;
- Fig. 2: shows a flowchart of operation for the transmission apparatus shown in Fig. 1;
- Fig. 3: shows a schematic diagram of a receiving apparatus for operating in a receiver chain processing time domain reception symbols with a first number of samples as being transmitted by the transmission method shown in Fig. 2;
- Fig. 4: shows a flowchart of operation for the receiving apparatus shown in Fig. 3;
- Fig. 5: shows a further detailed schematic diagram of the transmission apparatus as shown in Fig. 1 and the receiving apparatus shown in Fig. 3 when being applied to an OFDM multicarrier transmission scheme;
- Fig. 6: shows a flowchart of operation for the transmission apparatus shown in Fig. 5;
- Fig. 7: shows a flowchart of operation for the receiving apparatus shown in Fig. 5;
- Fig. 8: shows a schematic diagram of a communication device having structural elements for realization of the transmission apparatus shown in Fig. 1 and 5 and the receiving apparatus shown in Fig. 3 and 5;
- Fig. 9: shows an example of a coding waveform according to the present invention;
- Fig. 10: shows an example of an OV-OFDM time transmission symbol prior to and subsequent to truncation;
- Fig. 11: shows a diagram illustrating spectral efficiency of the overlap encoding and decoding approach according to the present invention; and
- Fig. 12: shows a diagram illustrating spectral efficiency of the overlap encoding and decoding approach according to the present invention when being combined with TPC.

### DESCRIPTION OF EMBODIMENTS

In the following the present invention will be described with reference to the drawing and examples thereof. It should be noted that clearly the present invention may also be implemented using variations and modifications thereof which will be apparent and can be readily made by those skilled in the art without departing from the scope of the present invention as defined by the claims. E.g., functionalities described above may be realized in software, in hardware, or a combination thereof.

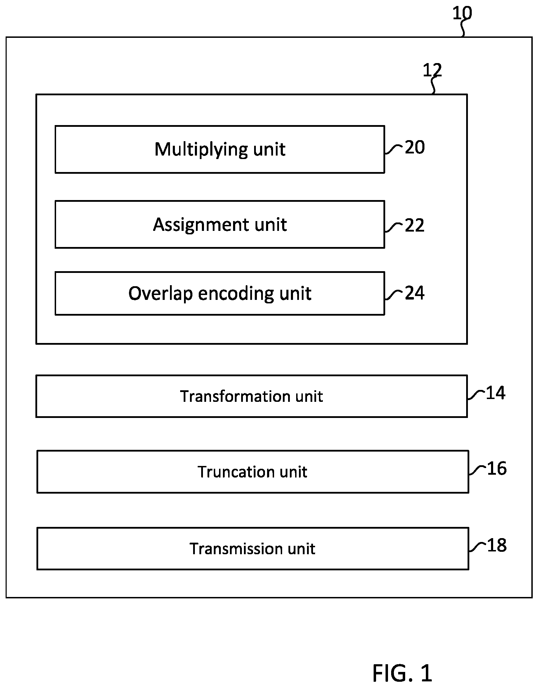

Fig. 1 shows a schematic diagram of a transmission apparatus 10 for operating in a transmitter chain using a multicarrier transmission scheme having multiple subcarriers.

As shown in Fig. 1, the transmission apparatus 10 comprises an encoder unit 12, a transformation unit 14, a truncation unit 16, and a transmission unit 18.

As shown in Fig. 1, the encoder unit 12 comprises a multiplying unit 20, an assignment unit 22, and an overlap encoding unit 24.

Operatively, the encoder unit 12 is adapted to achieve the overlap encoding according to the present invention. Heretofore the encoding unit 12 comprises the multiplying unit 20, the assignment unit 22, and the overlap encoding unit 24.

Operatively, the multiplying unit 20 is adapted to multiply constellation symbols representing data bits in the frequency domain with samples of a coding waveform to form sample products with respect to every constellation symbol.

Operatively, the assignment unit 22 is adapted to assign sample products of every constellation symbol to different subcarriers.

Operatively, the overlap encoding unit 24 is adapted to determine an overlap encoded frequency domain transmission symbol with respect to every subcarrier as sum of sample products assigned to every subcarrier.

Further, operatively the transformation unit 14 is adapted to transform every overlap encoded frequency domain transmission symbol into a time domain transmission symbol each having a predetermined number of samples.

Still further, operatively the truncation unit 16 is adapted to truncate the time domain transmission symbol by removing a predetermined number of samples from the time domain transmission symbol.

Finally, operatively the transmission unit 18 is adapted to transmit the truncated time domain transmission symbol.

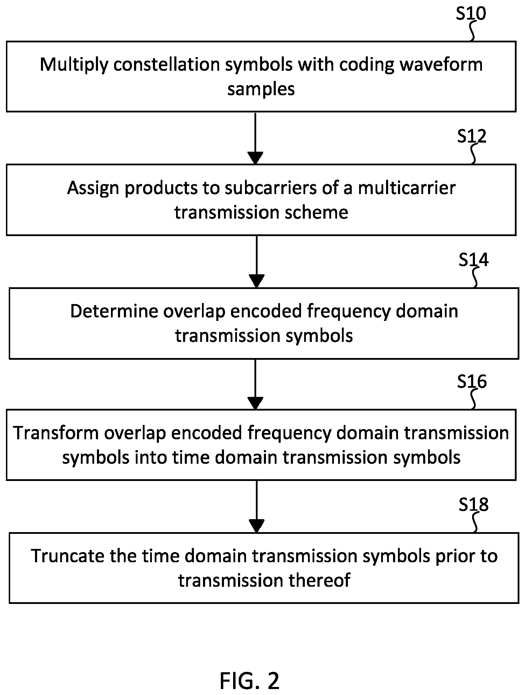

Fig. 2 shows a flowchart of operation for the transmission apparatus shown in Fig. 1.

As shown in Fig. 2, in a step S10, executed by the multiplying unit 20 shown in Fig. 1, constellation symbols representing data bits in the frequency domain are multiplied with samples of a coding waveform to form sample products with respect to every constellation symbol.

As shown in Fig. 2, in a step S12, executed by the assignment unit 22 shown in Fig. 1, sample products of every constellation symbol are assigned to different subcarriers.

As shown in Fig. 2, in a step S14, executed by the overlap encoding unit 24 shown in Fig. 1, there is determined an overlap encoded frequency domain transmission symbol with respect to every subcarrier as sum of sample products assigned to every subcarrier.

As shown in Fig. 2, in a step S16, executed by transformation unit 14 shown in Fig. 1, every overlap encoded frequency domain transmission symbol is transformed into a time domain transmission symbol each having a predetermined number of samples.

As shown in Fig. 2, in a step S18, executed by the truncation unit 16 shown in Fig. 1, the time domain transmission symbol is truncated by removing a predetermined number of samples from the time domain transmission symbol prior to transmission thereof.

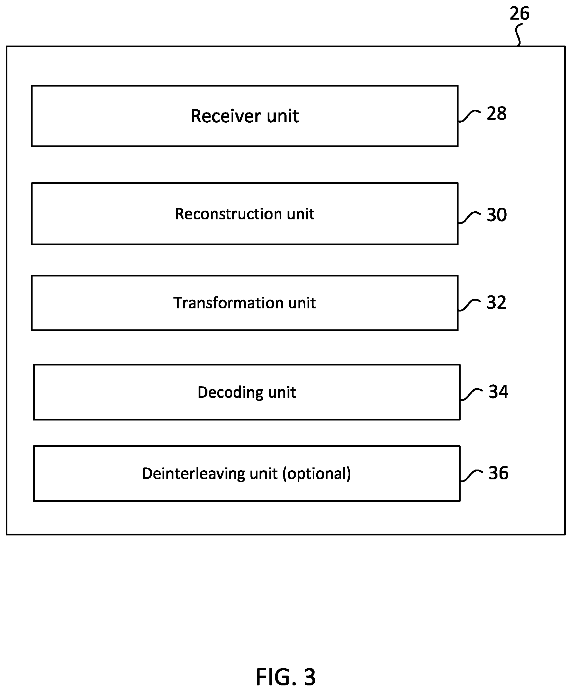

Fig. 3 shows a schematic diagram of a receiving apparatus 26 for operating in a receiver chain processing time domain reception symbols with a first number of samples as being transmitted by the transmission method shown in Fig. 2.

As shown in Fig. 3, the receiver apparatus 26 comprises a receiving unit 28, a reconstruction unit 30, a transformation unit 32, a decoding unit 34, and an optional deinterleaving unit 36.

Operatively, the receiving unit 28 is adapted to receive a time domain reception symbol.

Further, operatively the reconstruction unit 30 is adapted to determine a reconstructed time domain reception symbol with a second number of samples being larger than the first number of samples by adding zero samples to the received time domain reception symbol.

Further, operatively the transformation unit 32 is adapted to transform the reconstructed time domain reception symbol into subcarrier samples of an overlap encoded frequency domain reception symbol.

Further, operatively the decoding unit 34 is adapted to decode overlap encoded frequency domain reception symbols using a sequence decoding algorithm.

Finally, operatively the deinterleaving unit 36 is adapted to operate of the output of the decoding unit 34. It should be noted that the operation of the deinterleaving unit 36 is an option depending of application of interleaving at the transmitter side.

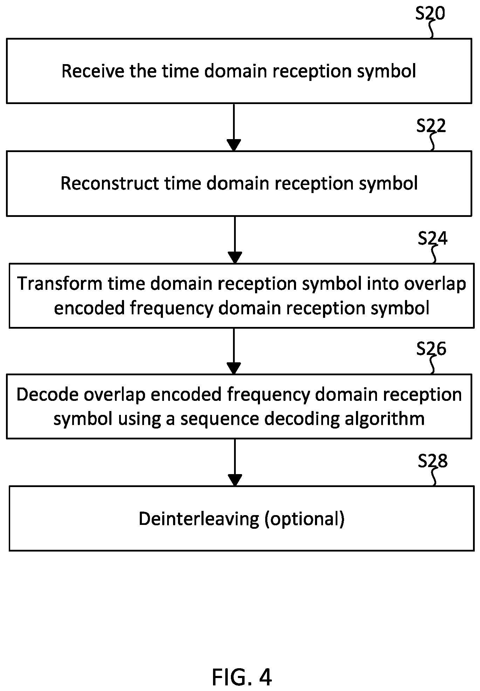

Fig. 4 shows a flowchart of operation for the receiving apparatus shown in Fig. 3.

As shown in Fig. 4, in a step S20, executed by the receiver unit 28 shown in Fig. 3, there is determined a reconstructed time domain reception symbol with a second number of samples being larger than the first number of samples by adding zero samples to every received time domain reception symbol.

As shown in Fig. 4, in a step S22, executed by the reconstruction unit 30 shown in Fig. 3, there is determined a reconstructed time domain reception symbol with a second number of samples being larger than the first number of samples by adding zero samples to the received time domain reception symbol.

As shown in Fig. 4, in a step S24, executed by the transformation unit 32 shown in Fig. 3, the reconstructed time domain reception symbol is transformed into subcarrier samples of an overlap encoded frequency domain reception symbol.

As shown in Fig. 4, in a step S26, executed by the decoding unit 34 shown in Fig. 3, the overlap encoded frequency domain reception symbol is decoded using a sequence decoding algorithm.

As shown in Fig. 4, in a step S28, executed by the deinterleaving unit 36 shown in Fig. 3, the deinterleaving is applied to the decoded overlap encoded frequency domain reception symbol. It should be noted that the application of deinterleaving is optional and only applicable if interleaving is applied at the transmitter side.

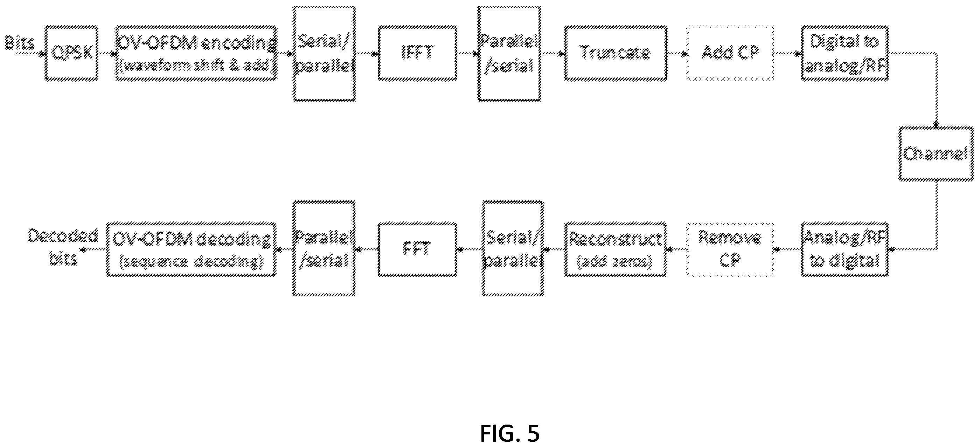

Fig. 5 shows a further detailed schematic diagram of the transmission apparatus as shown in Fig. 1 and the receiving apparatus shown in Fig. 3 when being applied to a OFDM multicarrier transmission scheme.

As shown in Fig. 5, bits of an input bit stream are mapped onto constellation symbols in the frequency domain according to a predetermined mapping scheme (QPSK).

As shown in Fig. 5, at the transmitter side the encoding unit 12 and the truncation unit 14 are added to the OFDM transmission chain. The transformation unit and the transmission unit are similar to the standard OFDM transmission chain.

As shown in Fig. 5, on the receiver side, the reconstruction unit 30 and the decoding unit 34 are added to the OFDM receiver chain while the receiver unit 28 and the transformation unit 32 are similar to the standard OFDM receiver chain.

Thus, according to the present invention there is provided a new multicarrier transmission scheme references as OV-OFDM or equivalently Overlap-coded OFDM which enables using the overlapped coding structure in OFDM as will explained in more detail in the following.

According to the present invention OV-OFDM overlapped coding structure in OFDM is adopted on the OFDM subcarriers in frequency domain. Each QPSK symbol is represented by a waveform comprising multiple subcarriers.

Heretofore, operatively the encoder 12 is adapted to shift and partially overlap the waveforms representing multiple QPSK symbols. Further, the encoder unit 12 is adapted to add on each subcarrier the overlapped waveform samples. In this way, a frequency-domain OV-OFDM symbol is formed with N subcarriers.

As shown in Fig. 5, operatively the truncation unit 16 is adapted to truncate the time-domain OV-OFDM transmission symbol after the IFFT according to a coding waveform and a predetermined overlap density also called overlap fold as will be explained in more detail in the following with respect to Fig, 9 and 10.

According to the present invention, basically the number of samples are reduced to be much less than the FFT size, which reduces the OFDM symbol period to increase the spectrum efficiency so as to scale with the overlap density.

As shown in Fig. 5, at the receiver side the reconstruction unit 30 is adapted, before FFT, to reconstruct the OV-OFDM transmission symbol by filling the zeros in the end or in the middle to get back to a N-sample long OV-OFDM transmission symbol.

As shown in Fig. 5, after FFT, the decoding unit 34 is adapted to apply a sequence decoding algorithm e.g. Viterbi decoder, to decode the QPSK transmission symbols. It should be noted that according to the present invention the OV-OFDM transmission scheme may be concatenated with other advanced codes, e.g. turbo codes, LDPC etc. In this case, the decoding unit 34 will output soft symbols to the decoder of other codes for further decoding.

Further, it should be noted that according to the present invention the overlap encoded frequency domain transmission symbol may be the output of an inner coding scheme in a concatenated coding scheme.

Still further, according to the present invention the scheme shown in Fig. 5 may be extended by applying interleaving to the input data bit stream, e.g., random interleaving, and by applying deinterleaving to the bit stream output by the decoding unit 34 at the receiver side.

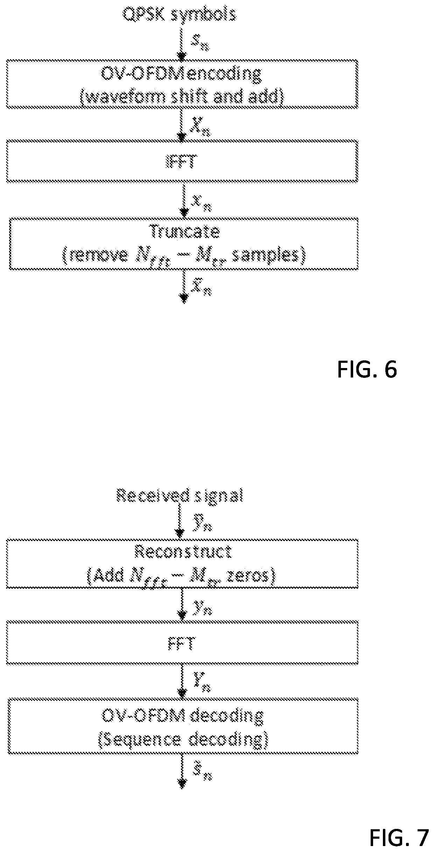

Fig. 6 shows a flowchart of operation for the transmission apparatus shown in Fig. 5.

According to the present invention the multiplying unit 20 of the encoding unit 12 is adapted to form sample products ***sᵢp*(*n - i*)*,*** the assignment unit 22 is adapted to assign the sample products to different subcarriers ***n*,** and the overlap encoding unit 24 is adapted to determine overlap encoded frequency domain transmission symbols according to ${X}_{n} = {\sum }_{i = 0}^{N - K + 1} {s}_{i} p \left(n-i\right) , n = 0 , 1 , … , N - 1 ,$ and $p \left(n\right) = 0 , for n > K - 1 or n < 0$

Here, ***n*** represents the index of the subcarrier, N is the number of loaded subcarriers, ***sᵢ*** represents the i-th constellation symbol, ***p*(n*)*** denotes the coding waveform, and *K* is the overlap fold or overlap density which determines how many constellation symbols are overlapped and added on each subcarrier.

Without loss of generality one may assume - as an illustrative example - that N = 8 K = 4, and p(n) = 0, for n > K-1 or n < 0 ${X}_{n} = {\sum }_{i = 0}^{N - K + 1} {s}_{i} p \left(n-i\right) , n = 0 , 1 , … , N - 1 ,$

Then, maximumly, 5, i.e., N-K+1, constellation symbols (i.e. N-K+1) can be loaded on 8, i.e., N, subcarriers according to

| n-i | s0 | s1 | s2 | s3 | s4 |
|---|---|---|---|---|---|
| X7 | | | | | p(3) |
| X6 | | | | p(3) | p(2) |
| X5 | | | p(3) | p(2) | p(1) |
| X4 | | p(3) | p(2) | p(1) | p(0) |
| X3 | p(3) | p(2) | p(1) | p(0) | |
| X2 | p(2) | p(1) | p(0) | | |
| X1 | p(1) | p(0) | | | |
| X0 | p(0) | | | | |

and $X 0 = s 0 * p \left(0\right)$ $X 1 = s 0 * p \left(1\right) + s 1 * p \left(0\right)$ $X 2 = s 0 * p \left(2\right) + s 1 * p \left(1\right) + s 2 * p \left(0\right)$ $X 3 = s 0 * p \left(3\right) + s 1 * p \left(2\right) + s 2 * p \left(1\right) + s 3 * p \left(0\right)$ $X 4 = s 1 * p \left(3\right) + s 2 * p \left(2\right) + s 3 * p \left(1\right) + s 4 * p \left(0\right)$ $X 5 = s 2 * p \left(3\right) + s 3 * p \left(2\right) + s 4 * p \left(1\right)$ $X 6 = s 3 * p \left(3\right) + s 4 * p \left(2\right)$ $X 7 = s 4 * p \left(3\right)$

As shown in Fig. 6, operatively the transformation unit 14 of the transmitter apparatus executes step S16 such that the transformation of samples of overlap encoded constellation symbols into samples of every time domain transmission symbol is achieved by an IFFT with block length Nfft, the number of samples truncated from time domain transmission symbol is Nfft-Mtr, and the truncation ratio Mtr/Nfft is set based on the overlap fold K and the waveform ***p*(*n*)** which determine how the energy of time-domain samples is distributed. As indicated above, the maximum number of constellation symbols represented by one overlap encoded frequency domain transmission symbol is Nfft + K -1.

As shown in Fig. 6, OV-OFDM encoding relates to the step S10 to S14 shown in Fig 2. At the transmitter side data bits are first mapped to constellation points (symbol) in a complex plane, e.g., using QPSK. Then the QPSK symbols are encoded using the overlapped principle according to the present invention. Each I or Q component of a QPSK symbol is represented a waveform composed of ***K*** samples where each sample will be mapped to a subcarrier in frequency domain. The waveform of *i*-th QPSK symbol (*i* = 0 ... *N-K+1,* assuming *N* subcarriers) will shift by one sample or one subcarrier. In this way, except for the first subcarrier and the last subcarrier, at each subcarrier, there are overlapped samples from waveforms. These overlapped samples are added at each subcarrier to form the coded subcarrier. This is different from the original OFDM where the subcarriers are loaded with independent QAM symbols.

As shown in Fig. 6, in step S16 the coded subcarriers ***Xₙ*** are transformed to time-domain OV-OFDM symbol ***xₙ*** by IFFT.

As shown in Fig. 6, in step S18 after IFFT, the time-domain OV-OFDM symbol is truncated from ***N_{fft}*** samples to ***Mₜᵣ*** samples by removing ***N_{fft}*** - ***Mₜᵣ*** samples which tend to have low amplitudes due to the waveform used and the overlapping structure.

As an example, after truncation the OFDM symbol length may be reduced to 282 samples from the original 1024 samples.

The truncation is to reduce the duration of OV-OFDM symbol to increase the bit rate or spectrum efficiency. This can be done because the same information is carried by the waveform comprising of *K* subcarriers (bandwidth is K times of subcarrier spacing), which results in the time-domain signal becomes more concentrated to a shorter duration. Therefore, according to the present invention removing some time-domain samples with low amplitude has small effect to the signal information.

In the following it will be explained why truncation according to the present invention is an important feature in OV-OFDM to achieve increased spectrum efficiency.

In OV-OFDM without considering cyclic-prefix (CP), for ***N*** subcarriers, 2(***N* + 1 - *K***) bits can be coded in one OV-OFDM symbol, the spectral efficiency can be expressed as ${η}_{OV - OFDM} = \frac{2 \left(N+1-K\right) δ}{N Δ f {T}_{sym}} = \frac{2 \left(N+1-K\right) δ}{N}$ where **Δ*f*** is subcarrier spacing, ***T_{sym} =* 1/Δ*f*** denotes the duration of OV-OFDM symbol, and ***δ*** denotes truncation ratio ***N***_{fft}/***M***ₜᵣ.

When ***N*** >> ***K**,* the spectral efficiency can be expressed as ${η}_{OV - OFDM} \approx 2 δ$

This shows that the spectral efficiency of the proposed OV-OFDM depends only on the truncation ratio. The truncation operation is the key to increase spectrum efficiency. Without truncation, the spectrum efficiency will be only 2, the same as using QPSK in OFDM, no matter how high the overlap fold, ***K,*** is.

According to the present invention the truncation ratio is set based on the overlap fold, ***K*,** and the waveform used. For the raised cosine waveform, we use in this work, the truncation ratio, ***δ* ,** is set around K/(2***γ*(1+α)**). In this case, the spectrum efficiency can be further expressed as ${η}_{OV - OFDM} \approx \frac{K}{γ \left(1+α\right)}$ where ***α*** and ***γ*** determines the waveform shape. In this way, once ***α*** and ***γ*** are set from a choice of waveform, the spectrum efficiency can be controlled by changing ***K*,** the overlap fold. It means that increasing ***K*** will increase the spectrum efficiency and thus the bit rate of the system. In this sense, it functions like the modulation order in QAM-based OFDM.

Fig. 7 shows a flowchart of operation for the receiving apparatus shown in Fig. 5.

As shown in Fig. 7, operatively the reconstruction unit 30 according to the present invention is adapted to execute step S22 to determine reconstructed time domain reception symbol with a full number Nfft of samples being larger than the received number of samples by adding zero samples to every received time domain reception symbol.

Thus, the received time-domain OV-OFDM transmission symbol composed of ***Mₜᵣ*** samples is reconstructed as an OV-OFDM symbol of ***N_{fft}*** samples by adding ***N_{fft} - Mₜᵣ*** zeros to reconstruct the untruncated OV-OFDM symbol.

As shown in Fig. 7, operatively the transformation unit 32 of the receiving apparatus 26 is adapted to execute step S24 to transform reconstructed time domain reception symbols into subcarrier samples of the overlap encoded frequency domain reception symbol is achieved by a FFT transformation with block length Nfft. Thus, the reconstructed symbol is transformed back to frequency domain by FFT.

As shown in Fig. 7, operatively the decoding unit 34 of the receiving apparatus 26 is adapted to execute step S26 to decode of the overlap encoded frequency domain reception symbols. As an option this may be done separately for In-phase (I) and Quadrature (Q) components.

According to the present invention the decoding unit 34 is adapted to use either a Viterbi algorithm when overlap encoding is done without using a concatenated coding scheme or a BCJR (Bahl, Cocke, Jelinek, and Raviv) algorithm when overlap encoding is done within the framework of a concatenated coding scheme. The result is the decoding of the frequency-domain symbol ***Yₙ.***

It should be noted that according to the present invention OV-OFDM can be used together with other channel codes following the principle of concatenated codes, where OV-OFDM is used as the inner code and any other code, e.g. LDPC, Turbo code, TPC (Turbo product code) etc., is used as the outer code.

Also, interleaving can be used to avoid burst errors caused by OV-OFDM decoder to improve the performance. The OV-OFDM receiver apparatus 26 can output either soft or hard bits depending on the outer code used. For an outer code supporting both hard bits and soft bits, using soft bits achieves better performance.

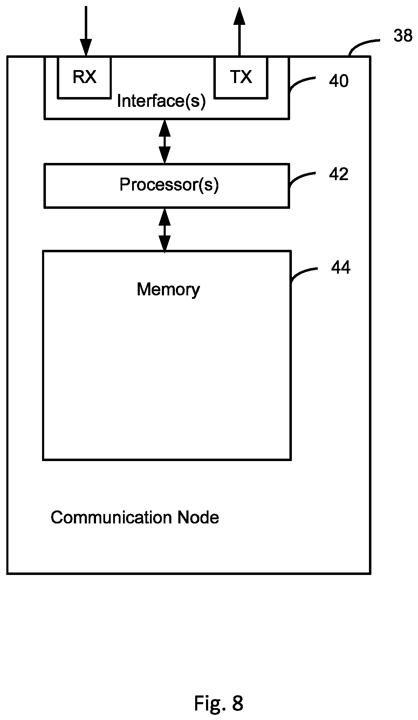

Fig. 8 shows a schematic diagram of a communication device having structural elements for realization of the transmission apparatus shown in Fig. 1 and 5 and the receiving apparatus shown in Fig. 3 and 5.

As shown in Fig. 8, the apparatus 38 for operating in a transmitter chain using a multicarrier transmission scheme having multiple subcarriers comprises an interface 40, a processor 42 and a memory 44, the memory 44 containing instructions executable by the processor 42 whereby said apparatus 40 is operative to execute the steps S10 to S18 as outlined above for transmission and/or the steps S22 to S26 as explained above for reception.

As an alternative the apparatus 40 may also be operated in a receiver chain processing time domain reception symbols with a first number of samples and being transmitted by a transmission method as explained above. Then the memory 44 contains instructions executable by the processor 42 whereby said apparatus 40 is operative to execute the steps S22 to S26 as explained above for reception.

It should be noted that the memory 44 of the apparatus 40 may be configured to achieve transmission and reception functionality according to the present invention.

It is further noted that the apparatus of Fig. 1, 3, and/or 8 may be operating in a transmitter chain using the multicarrier transmission scheme having the multiple subcarriers as described above, e.g. the transmitter chain of Fig. 5. These apparatuses may form part of such a transmitter chain. Further, according to some embodiments, such a transmitter chain is provided.

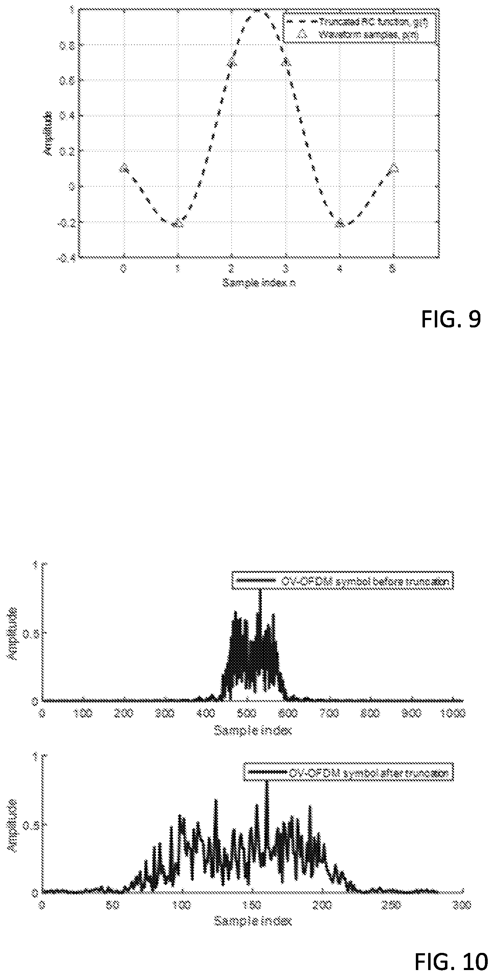

Fig. 9 shows an example of a coding waveform ***p*(*n*)** according to the present invention.

According to the present invention, the coding waveform used by the multiplying unit 20 of the encoding unit 12 is in the frequency domain and may be a truncated raised cosine function ***g*(*f*)** expressed as $g \left(f\right) = \left\{\begin{matrix}\frac{cos \left(\frac{παf}{{F}_{c}}\right) ⋅ Sinc \left(\frac{f}{{F}_{c}}\right)}{1 - 4 {\left(\frac{παf}{{F}_{c}}\right)}^{2}} , & \left|f\right| \leq γ {F}_{c} \\ 0 , & \left|f\right| > γ {F}_{c}\end{matrix}\right.$ where a roll-off factor ***α*** determines the waveform shape and an extension factor ***γ*** denotes the truncation factor of the truncated raised cosine function. The roll-off factor is 0 ≤ ***α*** ≤ 1 and the extension factor is ***γ*** > 1.

Further, the coding waveform ***p*(*n*)** is determined according to an overlap fold K representing the number of samples which are uniformly sampled from the truncated raised cosine function ***g*(*f*)*,*** with ***p*(*n*) *=* 0** for n > K-1 or n < 0. According to the present invention the overlap fold is an integer number K ≥ 4.

Fig. 10 shows an example of an OV-OFDM time transmission symbol prior to and subsequent to truncation executed by truncation unit 18 of the transmission apparatus 10.

As shown in Fig. 10, the truncation ratio Mtr/Nfft is set such that the average energy of removed samples is lower than a predetermined threshold.

As shown in Fig. 10, samples are continuously removed in the middle of time domain transmission symbols or at both ends of time domain transmission symbols according to a time domain representation of the coding waveform.

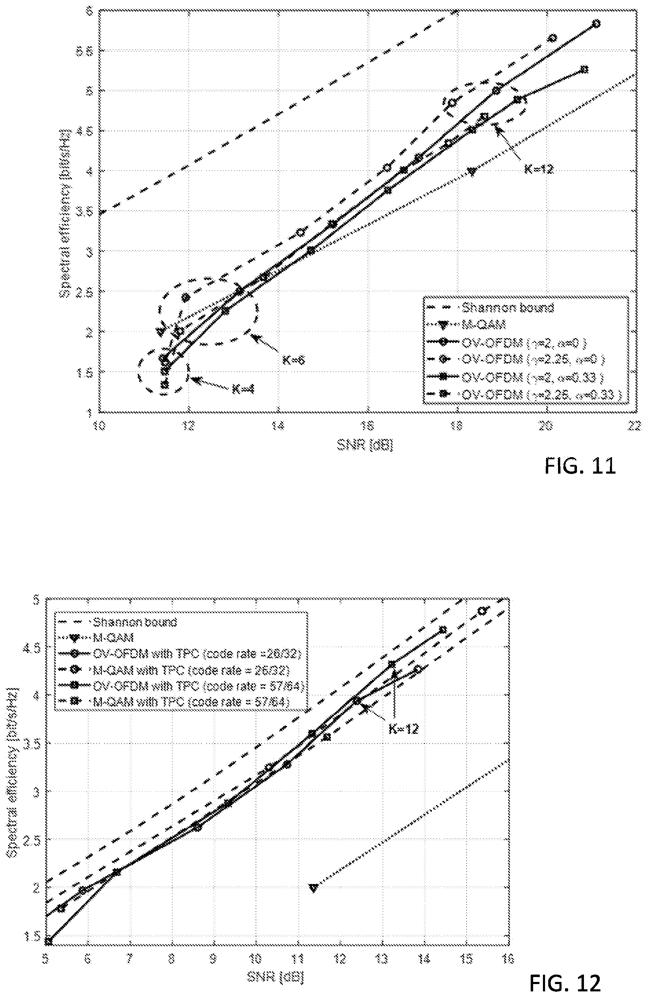

Fig. 11 shows a diagram illustrating spectral efficiency of the overlap encoding and decoding approach according to the present invention.

For the data shown performance of the proposed OV-OFDM implementation has been evaluated over AWGN channels by simulations. The simulation setup was as follows:
- OV-OFDM waveform: the frequency-domain waveform representation of the time-domain raised cosine function with roll-off factor ***α =* 0** or ***α =* 0.33** and the extension factor ***γ* = 2** or **2.25.**
- OV-OFDM only and OV-OFDM concatenated with TPC with code rate of 26/32 or 57/64.
- Random interleaver is used when TPC is used
- Number of iterations for TPC decoding is 10
- Overlap fold: ***K* = 4,6,8,10,12,13.**
- Viterbi algorithm is used for OV-OFDM decoding.
- FFT size N = 1024, with full load of ***N + K-*1** QPSK symbols.
- The truncation ratio is set to keep the samples which contains 99.68% energy in the OV-OFDM symbol (in the unit of dB, it means only -25 dB energy is removed).
- The target bit error rate (BER) is at 10⁻⁴.
- Channel: AWGN.

Fig. 11 shows the OV-OFDM spectrum efficiency for BER = 10⁻⁴ on AWGN channel.

As shown in Fig. 11, the spectral efficiency increases as the overlap fold ***K*** increases. Regarding the choice of the roll-off factor, the smaller roll-off factor can obtain better performance with same extension factor. Moreover, a lager extension factor can obtain better performance when roll-off factor is the same.

Generally, the proposed OV-OFDM has better performance than QAM, but worse than Shannon bound. By increasing the overlap fold, the SNR/coding gain between OV-OFDM and QAM is increased at the same spectral efficiency. However, the increasing rate starts to decrease at ***K* = 13,** where we see that the curves starts to bend downwards from ***K* = 12** to 13. Following this trend, it is expected that the performance would not be better than Shannon bound by further increasing *K*.

Particularly in this simulation, up to ~3dB SNR gain is obtained with the waveform of ***α* = 0** and *γ* = 2.25 when the overlap fold is ***K =* 12** and 13.

Fig. 12 shows a diagram illustrating spectral efficiency of the overlap encoding and decoding approach according to the present invention when being combined with TPC.

Here, two code rates of 26/32 and 57/64 are used in the simulation, representing two cases with a lower or higher code rate.

As shown in Fig. 12, for both code rates of TPC with OV-OFDM, the spectrum efficiency is further improved compared to the use of OV-OFDM only. Therefore, adding an outer coder achieves additional coding gain over pure OV-OFDM. Further, for a lower TPC code rate of 26/32, OV-OFDM with TPC does not perform better than using TPC only. It means that in this case applying OV-OFDM does not bring additional coding gain to TPC with lower code rate.

However, for a higher TPC code rate of 57/64, OV-OFDM with TPC performs better than TPC when *K* > 8. Particularly, ~1 dB additional coding gain is achieved when *K* = 12 and 13. More interestingly, it performs even better than the TPC with a lower code rate of 26/32 when *K* > 10, though its code rate is higher with lower redundancy.

Particularly, it achieves ~0.5 dB SNR gain against the TPC with a lower code rate of 26/32. It shows that OV-OFDM is more effective to improve the channel codes with high code rates, which usually performs less efficient than that using lower code rates.

Further, for the encoding waveform, different alpha value ***α*** can be chosen in the waveform function ***g*(*f*)*,*** which changes how energy is distributed in the OV-OFDM symbols before truncation and therefore affect how many samples can be removed, which would eventually affect the coding performance regarding spectrum efficiency.

For illustration purpose, the following show two examples of waveforms with *α* = 1 and *α* = 0.33, respectively, and the corresponding examples of an OV-OFDM symbol before truncation.

At the OV-OFDM transmitter side, the subcarriers are overlap-coded with a frequency-domain waveform and then the overlap-coded subcarriers are transformed to time-domain OV-OFDM symbols by IFFT. Afterwards, each time-domain OV-OFDM symbol is truncated to a shorter duration before being transmitted to the channel.

At the OV-OFDM receiver side, each received truncated time-domain OV-OFDM symbol is first reconstructed to a full-length OV-OFDM symbol by filling zeros and then the reconstructed OV-OFDM symbol is transformed back to frequency-domain subcarriers by FFT. Afterwards, the subcarriers in each OV-OFDM symbol are decoded by sequence decoding algorithms.

Further, the data modulated on the subcarriers can be coded with other channel codes, like Turbo, LDPC etc. The sequence decoder of OV-OFDM can output the soft symbols to the decoder of other channel codes.

The above description focuses on the OV-OFDM implementation for AWGN channel, where the usage of cyclic prefix and frequency domain equalizer is not required. For time-dispersive fading channel, OV-OFDM will incorporate the same kind of cyclic prefix handling and frequency domain equalizer implementation as used in OFDM for combating against the fading channel effects. Thus, OV-OFDM is fully compatible with the OFDM transceiver structure and features.

In conclusion, the simulation results show that OV-OFDM can achieve good coding gain without introducing redundancy in the bit domain. It can achieve additional coding gain while approaching further to the Shannon bound when concatenated with other advanced codes, especially when coding rate is high. This is due to the new scheme called OV-OFDM, which is fully compatible to OFDM implementation structure. Therefore, OV-OFDM can be implemented on top of the existing OFDM-based wireless systems, e.g. 4G LTE, 5G NR, WiFi, DSL etc.

According to another preferred embodiment of the present invention there is provided a computer program product directly loadable into the internal memory of a processor comprising software code portions for performing the inventive transmission and/or receiving process when the product is run on the processor.

Therefore, the present invention is also provided to achieve an implementation of the inventive method steps on computer or processor systems. In conclusion, such implementation leads to the provision of computer program products for use with a computer system or more specifically a processor comprised in e.g., a communication device.

This programs defining the functions of the present invention can be delivered to a computer/processor in many forms, including, but not limited to information permanently stored in a cloud system, on non-writable storage media, e.g., read only memory devices such as ROM or CD ROM discs readable by processors or computer I/O attachments; information stored on writable storage media, e.g. hard drives; or information convey to a computer/processor through communication media such as network and/or telephone networks via download or other interfacing mechanisms. It should be understood that such media, when carrying processor readable instructions implementing the inventive concept represent alternate embodiments of the present invention.

## Claims

1. Transmission method in a transmitter chain using a multicarrier transmission scheme having multiple subcarriers, performed by a transmission apparatus, comprising the steps:
multiplying (S10) constellation symbols representing data bits in the frequency domain with samples of a coding waveform to form sample products with respect to every constellation symbol;
assigning (S12) sample products of every constellation symbol to different subcarriers;
determining (S14) an overlap encoded frequency domain transmission symbol with respect to every subcarrier as sum of sample products assigned to every subcarrier;
transforming (S16) every overlap encoded frequency domain transmission symbol into a time domain transmission symbol each having a predetermined number of samples; and
truncating (S18) the time domain transmission symbol by removing a predetermined number of samples from the time domain transmission symbol prior to transmission thereof,
wherein bits of an input bit stream are mapped onto constellation symbols in the frequency domain according to a predetermined mapping scheme and the samples of the overlap encoded constellation symbols are determined according to ${X}_{n} = {\sum }_{i = 0}^{N - K + 1} {s}_{i} p \left(n-i\right) , n = 0 , 1 , … , N - 1 ,$ and $p \left(n\right) = 0 , for n > K - 1 or n < 0$
where n represents the index of the subcarrier, N is the number of loaded subcarriers, ***sᵢ*** represents the i-th constellation symbol and ***p*(*n*)** denotes the coding waveform, and *K* is the overlap fold which determines how many constellation symbols are overlapped and added on each subcarrier.

2. Transmission method of claim 1, wherein the predetermined mapping scheme is QPSK.

3. Transmission method according to claim 1 or 2, wherein the coding waveform in frequency domain ***g*(*f*)** has a time domain representation where a subset of samples has amplitudes being larger than a predetermined threshold while the remaining samples have amplitudes being lower or equal than the predetermined threshold such the subset of samples carries most of the energy,
wherein, preferably, the coding waveform in frequency domain ***g*(*f*)** which is based on a truncated raised cosine function expressed as $g \left(f\right) = \left\{\begin{matrix}\frac{cos \left(\frac{παf}{{F}_{c}}\right) ⋅ Sinc \left(\frac{f}{{F}_{c}}\right)}{1 - 4 {\left(\frac{παf}{{F}_{c}}\right)}^{2}} , & \left|f\right| \leq {γF}_{c} \\ 0 , & \left|f\right| > {γF}_{c}\end{matrix}\right.$
where a roll-off factor ***α*** determines the waveform shape and an extension factor ***γ*** denotes the truncation factor of the truncated raised cosine function,
wherein, more preferably, the roll-off factor is 0 ≤ ***α*** ≤ 1 and the extension factor is ***γ*** > 1.

4. Transmission method according to any one of claims 1 to 3, wherein the coding waveform ***p*(*n*)** is determined according to an overlap fold K representing the number of samples which are uniformly sampled from the coding waveform in frequency domain ***g*(*f*),** with ***p*(*n*)** = 0 for n > K-1 or n < 0,
wherein, preferably, the overlap fold is an integer number K ≥ 4.

5. Transmission method according to one of the claims 1 to 4, wherein the transformation of samples of overlap encoded constellation symbols into samples of every time domain transmission symbol is achieved by an IFFT with block length Nfft, the number of samples truncated from time domain transmission symbol is Nfft-Mtr, and the truncation ratio Mtr/Nfft is set based on the overlap fold K and the waveform ***p*(*n*),**
wherein, preferably, the maximum number of constellation symbols represented by one overlap encoded frequency domain transmission symbol is Nfft + K -1,
wherein, more preferably, the truncation ratio Mtr/Nfft is set such that the average energy of removed samples is lower than a predetermined threshold.

6. Transmission method according to claim 5, wherein samples are continuously removed in the middle of time domain transmission symbols or at both ends of time domain transmission symbols according to a time domain representation of the coding waveform.

7. Transmission method according to one of the claims 1 to 6, wherein the multicarrier transmission scheme is OFDM; and/or
wherein the overlap encoded frequency domain transmission symbol is the output of an inner coding scheme in a concatenated coding scheme.

8. Transmission method according to one of the claims 1 to 7, comprising interleaving of data bits,
wherein, preferably, the interleaving is random interleaving.

9. Transmission apparatus for operating according to a multicarrier transmission scheme having multiple subcarriers, comprising:
an encoder unit (12) having a
multiplying unit (20) adapted to multiply constellation symbols representing data bits in the frequency domain with samples of a coding waveform to form sample products with respect to every constellation symbol;
an assignment unit (22) adapted to assign sample products of every constellation symbol to different subcarriers; and
an overlap encoding unit (24) adapted to determine an overlap encoded frequency domain transmission symbol with respect to every subcarrier as sum of sample products assigned to every subcarrier;
a transformation unit (14) adapted to transform every overlap encoded frequency domain transmission symbol into a time domain transmission symbol each having a predetermined number of samples;
a truncation unit (16) adapted to truncate the time domain transmission symbol by removing a predetermined number of samples from the time domain transmission symbol; and a
a transmission unit (18) adapted to transmit the truncated time domain transmission symbol,
wherein bits of an input bit stream are mapped onto constellation symbols in the frequency domain according to a predetermined mapping scheme and the samples of the overlap encoded constellation symbols are determined according to ${X}_{n} = {\sum }_{i = 0}^{N - K + 1} {s}_{i} p \left(n-i\right) , n = 0 , 1 , … , N - 1 ,$ and $p \left(n\right) = 0 , for n > K - 1 or n < 0$
where n represents the index of the subcarrier, N is the number of loaded subcarriers, ***sᵢ*** represents the i-th constellation symbol and ***p*(*n*)** denotes the coding waveform, and *K* is the overlap fold which determines how many constellation symbols are overlapped and added on each subcarrier.

10. Computer program product directly loadable into the internal memory of a mobile communication unit, comprising software code portions for performing the steps of one of the claims 1 to 8, when the product is run on a processor of the mobile communication unit.

## Patentansprüche

1. Übertragungsverfahren in einer Senderkette unter Verwendung eines Mehrträger-Übertragungsschemas mit mehreren Unterträgern, das von einer Übertragungsvorrichtung durchgeführt wird und die folgenden Schritte umfasst:
Multiplizieren (S10) von Konstellationssymbolen, die Datenbits in der Frequenzdomäne darstellen, mit Abtastwerten einer Codierungswellenform, um Abtastwertprodukte in Bezug auf jedes Konstellationssymbol zu bilden;
Zuweisen (S12) von Abtastwertprodukten jedes Konstellationssymbols zu verschiedenen Unterträgern;
Bestimmen (S14) eines überlappungscodierten Frequenzdomänen-Übertragungssymbols in Bezug auf jeden Unterträger als Summe von Abtastwertprodukten, die jedem Unterträger zugeordnet sind;
Umwandeln (S16) jedes überlappungscodierten Frequenzdomänen-Übertragungssymbols in ein Zeitdomänen-Übertragungssymbol, das jeweils eine vorbestimmte Anzahl von Abtastwerten aufweist; und
Trunkieren (S18) des Zeitdomänen-Übertragungssymbols durch Entfernen einer vorbestimmten Anzahl von Abtastwerten von dem Zeitdomänen-Übertragungssymbol vor seiner Übertragung,
wobei Bits eines Eingangsbitstroms gemäß einem vorbestimmten Zuordnungsschema Konstellationssymbolen in der Frequenzdomäne zugeordnet werden und die Abtastwerte der überlappungscodierten Konstellationssymbole bestimmt werden gemäß ${X}_{n} = {\sum }_{i = 0}^{N - K + 1} {s}_{i} p \left(n-1\right) , n = 0 , 1 , … , N - 1 ,$ und $p \left(n\right) = 0 , für n > K - 1 oder n > 0 ,$
wobei *n* den Index des Unterträgers darstellt, *N* die Anzahl beladener Unterträger ist, ***sᵢ*** das i-te Konstellationssymbol darstellt und ***p*(*n*)** die Codierungswellenform bezeichnet und *K* die Überlappungsfaltung ist, die bestimmt, wie viele Konstellationssymbole überlappt und auf jedem Unterträger hinzugefügt werden.

2. Übertragungsverfahren nach Anspruch 1, wobei es sich bei dem vorbestimmten Zuordnungsschema um QPSK handelt.

3. Verfahren nach Anspruch 1 oder 2, wobei die Codierungswellenform in der Frequenzdomäne ***g*(*f*)** eine Zeitdomänendarstellung aufweist, wobei eine Teilmenge von Abtastwerten Amplituden aufweist, die über einem vorbestimmten Schwellenwert liegen, während die übrigen Abtastwerte Amplituden aufweisen, die unter oder gleich dem vorbestimmten Schwellenwert sind, so dass die Teilmenge von Abtastwerten den größten Teil der Energie transportiert,
wobei die Codierungswellenform in der Frequenzdomäne ***g*(*f*),** die auf einer trunkierten Raised-Cosine-Funktion basiert, vorzugsweise ausgedrückt wird als $g \left(f\right) = \left\{\begin{matrix}\frac{cos \left(\frac{παf}{{F}_{c}}\right) ⋅ Sinc \left(\frac{f}{{F}_{c}}\right)}{1 - 4 {\left(\frac{παf}{{F}_{c}}\right)}^{2}} , & \left|f\right| \leq {γF}_{c} \\ 0 , & \left|f\right| > {γF}_{c}\end{matrix}\right.$ wobei ein Roll-off-Faktor ***α*** die Wellenform bestimmt und ein Extensionsfaktor ***γ*** den Trunkierungsfaktor der trunkierten Raised-Cosine-Funktion bezeichnet,
wobei insbesondere der Roll-off-Faktor 0 ≤ ***α*** ≤ 1 ist und der Extensionsfaktor ***γ*** > 1 ist.

4. Übertragungsverfahren nach einem der Ansprüche 1 bis 3, wobei die Codierungswellenform ***p*(*n*)** gemäß einer Überlappungsfaltung *K* bestimmt wird, die die Anzahl von Abtastwerten darstellt, die aus der Codierungswellenform in der Frequenzdomäne ***g*(*f*)** gleichmäßig abgetastet werden, wobei ***p*(*n*)** = 0 für *n > K -* 1 oder *n <* 0,
wobei vorzugsweise die Überlappungsfaltung eine ganze Zahl *K* ≥ 4 ist.

5. Übertragungsverfahren nach einem der Ansprüche 1 bis 4, wobei die Umwandlung von Abtastwerten von überlappungscodierten Konstellationssymbolen in Abtastwerte jedes Zeitdomänen-Übertragungssymbols durch eine IFFT mit einer Blocklänge Nfft erreicht wird, wobei die von dem Zeitdomänen-Übertragungssymbol trunkierte Anzahl von Abtastwerten Nfft - Mtr beträgt und das Trunkierungsverhältnis Mtr/Nfft basierend auf der Überlappungsfaltung K und der Wellenform ***p*(*n*)** festgelegt wird,
wobei vorzugsweise die maximale Anzahl von Konstellationssymbolen, die durch ein überlappungscodiertes Frequenzdomänen-Übertragungssymbol dargestellt wird, Nfft + K - 1 beträgt,
wobei insbesondere das Trunkierungsverhältnis Mtr/Nfft so festgelegt wird, dass die durchschnittliche Energie entfernter Abtastwerte unter einem vorbestimmten Schwellenwert liegt.

6. Übertragungsverfahren nach Anspruch 5, wobei Abtastwerte in der Mitte der Zeitdomänen-Übertragungssymbole oder an beiden Enden der Zeitdomänen-Übertragungssymbole gemäß einer Zeitdomänendarstellung der Codierungswellenform kontinuierlich entfernt werden.

7. Übertragungsverfahren nach einem der Ansprüche 1 bis 6, wobei es sich bei dem Mehrträger-Übertragungsschema um OFDM handelt; und/oder
wobei das überlappungscodierte Frequenzdomänen-Übertragungssymbol die Ausgabe eines inneren Codierungsschema in einem verketteten Codierungsschema ist.

8. Übertragungsverfahren nach einem der Ansprüche 1 bis 7, umfassend Verschachteln von Datenbits,
wobei es sich bei dem Verschachteln vorzugsweise um zufälliges Verschachteln handelt.

9. Übertragungsvorrichtung für Betrieb gemäß einem Mehrträger-Übertragungsschema mit mehreren Unterträgern, umfassend:
eine Encoder-Einheit (12) mit
einer Multiplikationseinheit (20), die dazu ausgelegt ist, Konstellationssymbole, die Datenbits in der Frequenzdomäne darstellen, mit Abtastwerten einer Codierungswellenform zu multiplizieren, um Abtastwertprodukte in Bezug auf jedes Konstellationssymbol zu bilden;
einer Zuweisungseinheit (22), die dazu ausgelegt ist, Abtastwertprodukte jeder Konstellationssymbols verschiedenen Unterträgern zuzuweisen; und
einer Überlappungscodierungseinheit (24), die dazu ausgelegt, ein überlappungscodiertes Frequenzdomänen-Übertragungssymbol in Bezug auf jeden Unterträger als Summe von Abtastwertprodukten zu bestimmen, die jedem Unterträger zugewiesen sind;
eine Umwandlungseinheit (14), die dazu ausgelegt ist, jedes überlappungscodierte Frequenzdomänen-Übertragungssymbols in ein Zeitdomänen-Übertragungssymbol umzuwandeln, das jeweils eine vorbestimmte Anzahl von Abtastwerten aufweist;
eine Trunkierungseinheit (16), die dazu ausgelegt ist, das Zeitdomänen-Übertragungssymbol durch Entfernen einer vorbestimmten Anzahl von Abtastwerten aus dem Zeitdomänen-Übertragungssymbol vor seiner Übertragung zu trunkieren,
eine Sendeeinheit (18), der dazu ausgelegt, das trunkierte Zeitdomänen-Übertragungssymbol zu senden,
wobei Bits eines Eingangsbitstroms gemäß einem vorbestimmten Zuordnungsschema Konstellationssymbolen in der Frequenzdomäne zugeordnet werden und Abtastwerte der überlappungscodierten Konstellationssymbole bestimmt werden gemäß: ${X}_{n} = {\sum }_{i = 0}^{N - K + 1} {s}_{i} p \left(n-1\right) , n = 0 , 1 , … , N - 1 ,$ und $p \left(n\right) = 0 , für n > K - 1 oder n > 0 ,$
wobei *n* den Index des Unterträgers darstellt, *N* die Anzahl beladener Unterträger ist, ***sᵢ*** das i-te Konstellationssymbol darstellt und ***p*(*n*)** die Codierungswellenform bezeichnet und *K* die Überlappungsfaltung ist, die bestimmt, wie viele Konstellationssymbole überlappt und auf jedem Unterträger hinzugefügt werden.

10. Computerprogrammprodukt, das direkt in den internen Speicher einer mobilen Kommunikationseinheit geladen werden kann, umfassend Softwarecodeabschnitte zum Ausführen der Schritte nach einem der Ansprüche 1 bis 8, wenn das Produkt auf einem Prozessor der mobilen Kommunikationseinheit ausgeführt wird.

## Revendications

1. Procédé de transmission dans une chaîne émettrice utilisant un schéma de transmission multi-porteuses présentant de multiples sous-porteuses, réalisé par un appareil de transmission, comprenant les étapes suivantes :
la multiplication (S10) de symboles de constellation représentant des bits de données dans le domaine fréquentiel par des échantillons d'une forme d'onde de codage pour former des produits d'échantillons relatifs à chaque symbole de constellation ;
l'attribution (S12) de produits d'échantillons de chaque symbole de constellation à différentes sous-porteuses ;
la détermination (S14) d'un symbole de transmission de domaine fréquentiel encodé par superposition relatif à chaque sous-porteuse en tant que somme de produits d'échantillons attribués à chaque sous-porteuse ;
la transformation (S16) de chaque symbole de transmission de domaine fréquentiel encodé par superposition en un symbole de transmission de domaine temporel présentant chacun un nombre prédéterminé d'échantillons ; et
la troncature (S18) du symbole de transmission de domaine temporel en supprimant un nombre prédéterminé d'échantillons du symbole de transmission de domaine temporel avant sa transmission,
dans lequel des bits d'un flux binaire d'entrée sont mappés à des symboles de constellation dans le domaine fréquentiel selon un schéma de mappage prédéterminé et les échantillons des symboles de constellation encodés par superposition sont déterminés selon : ${X}_{n} = {\sum }_{i = 0}^{N - K + 1} {s}_{i} p \left(n-1\right) , n = 0 , 1 , … , N - 1 ,$ et $p \left(n\right) = 0 , pour n > K - 1 ou n < 0$
où n représente l'indice de la sous-porteuse, N est le nombre de sous-porteuses chargées, ***sᵢ*** représente le i-ème symbole de constellation et ***p(n)*** indique la forme d'onde de codage, et ***K*** est le pli en superposition qui détermine le nombre de symboles de constellation qui sont superposés et ajoutés sur chaque sous-porteuse.

2. Procédé de transmission selon la revendication 1, dans lequel le schéma de mappage prédéterminé est GPSK.

3. Procédé de transmission selon la revendication 1 ou 2, dans lequel la forme d'onde de codage dans le domaine fréquentiel ***g*(*f*)** présente une représentation de domaine temporel dans laquelle un sous-ensemble d'échantillons présente des amplitudes supérieures à un seuil prédéterminé tandis que les échantillons restants présentent des amplitudes inférieures ou égales au seuil prédéterminé de sorte que le sous-ensemble d'échantillons porte la majorité de l'énergie,
dans lequel, de préférence, la forme d'onde de codage dans le domaine fréquentiel ***g*(*f*)** est basée sur une fonction cosinus surélevé tronqué exprimée comme suit : $g \left(f\right) = \left\{\begin{matrix}\frac{cos \left(\frac{παf}{{F}_{c}}\right) . Sinc \left(\frac{f}{{F}_{c}}\right)}{1 - 4 {\left(\frac{παf}{{F}_{c}}\right)}^{2}} , & \left|f\right| \leq {γF}_{c} \\ 0 , & \left|f\right| > {γF}_{c}\end{matrix}\right.$
où un facteur de décroissance ***α*** détermine la forme de forme d'onde et un facteur d'extension ***γ*** indique le facteur de troncature de la fonction cosinus surélevé tronqué,
dans lequel, plus préférentiellement, le facteur de décroissance est **0 ≤ *α* ≤ 1** et le facteur d'extension est ***γ* > 1.**

4. Procédé de transmission selon l'une quelconque des revendications 1 à 3, dans lequel la forme d'onde de codage ***p*(*n*)** est déterminée selon un pli en superposition ***K*** représentant le nombre d'échantillons qui sont échantillonnés uniformément à partir de la forme d'onde de codage dans le domaine fréquentiel ***g*(*f*),** avec ***p*(*n*) *=* 0** pour ***n > K* - 1** ou ***n <* 0*,***
dans lequel, de préférence, le pli en superposition est en nombre entier ***K* ≥ 4.**

5. Procédé de transmission selon l'une des revendications 1 à 4, dans lequel la transformation d'échantillons de symboles de constellation encodés par superposition en échantillons de chaque symbole de transmission de domaine temporel est réalisée par une IFFT avec une longueur de bloc Nfft, le nombre d'échantillons tronqués à partir du symbole de transmission de domaine temporel est Nfft-Mtr, et le rapport de troncature Mtr/Nfft est défini sur la base du pli en superposition ***K*** et de la forme d'onde ***p*(*n*),**
dans lequel, de préférence, le nombre maximal de symboles de constellation représentés par un symbole de transmission de domaine fréquentiel encodé par superposition est Nfft+K-1,
dans lequel, plus préférentiellement, le rapport de troncature Mtr/Nfft est défini de sorte que l'énergie moyenne d'échantillons supprimés soit supérieure à un seuil prédéterminé.

6. Procédé de transmission selon la revendication 5, dans lequel des échantillons sont supprimés continuellement au milieu de symboles de transmission de domaine temporel ou aux deux extrémités de symboles de transmission de domaine temporel selon une représentation de domaine temporel de la forme d'onde de codage.

7. Procédé de transmission selon l'une des revendications 1 à 6, dans lequel le schéma de transmission multi-porteuses est OFDM ; et/ou
dans lequel le symbole de transmission de domaine fréquentiel encodé par superposition est la sortie d'un schéma de codage intérieur dans un schéma de codage concaténé.

8. Procédé de transmission selon l'une des revendications 1 à 7, comprenant l'entrelacement de bits de données,
dans lequel, de préférence, l'entrelacement est un entrelacement aléatoire.

9. Appareil de transmission destiné à fonctionner selon un schéma de transmission multi-porteuses présentant de multiples sous-porteuses, comprenant :
une unité d'encodage (12) présentant
une unité de multiplication (20) adaptée pour multiplier des symboles de constellation représentant des bits de données dans le domaine fréquentiel par des échantillons d'une forme d'onde de codage pour former des produits d'échantillons relatifs à chaque symbole de constellation ;
une unité d'attribution (22) adaptée pour attribuer des produits d'échantillons de chaque symbole de constellation à différentes sous-porteuses ; et
une unité d'encodage par superposition (24) adaptée pour déterminer un symbole de transmission de domaine fréquentiel encodé par superposition relatif à chaque sous-porteuse en tant que somme de produits d'échantillons attribués à chaque sous-porteuse ;
une unité de transformation (14) adaptée pour transformer chaque symbole de transmission de domaine fréquentiel encodé par superposition en un symbole de transmission de domaine temporel présentant chacun un nombre prédéterminé d'échantillons ;
une unité de troncature (16) adaptée pour tronquer le symbole de transmission de domaine temporel en supprimant un nombre prédéterminé d'échantillons du symbole de transmission de domaine temporel ; et
une unité de transmission (18) adaptée pour transmettre le symbole de transmission de domaine temporel tronqué ;
dans lequel des bits d'un flux binaire d'entrée sont mappés à des symboles de constellation dans le domaine fréquentiel selon un schéma de mappage prédéterminé et les échantillons des symboles de constellation encodés par superposition sont déterminés selon : ${X}_{n} = {\sum }_{i = 0}^{N - K + 1} {s}_{i} p \left(n-1\right) , n = 0 , 1 , … , N - 1$ et $p \left(n\right) = 0 , pour n > K - 1 ou n < 0$
où n représente l'indice de la sous-porteuse, N est le nombre de sous-porteuses chargées, ***sᵢ*** représente le i-ème symbole de constellation et ***p*(*n*)** indique la forme d'onde de codage, et ***K*** est le pli en superposition qui détermine le nombre de symboles de constellation qui sont superposés et ajoutés sur chaque sous-porteuse.

10. Produit de programme informatique pouvant être directement chargé dans la mémoire interne d'une unité de communication mobile, comprenant des parties de code logiciel pour réaliser les étapes selon l'une des revendications 1 à 8, lorsque le produit est exécuté sur un processeur de l'unité de communication mobile.
